# FASCICULE DE BREVET EUROPEEN

(11) **EP 3 944 980 B1**
(45) Date de publication et mention de la délivrance du brevet: **16.10.2024**
(21) Numéro de dépôt: 21187595.0
(22) Date de dépôt: 26.07.2021
(51) Int. Cl.: B60L 9/30, B60L 50/51, B60L 53/14, B60L 53/22, B60L 55/00, B60M 1/30, B61C 7/00, B61C 9/00, B61C 3/02, B61C 17/06

(54) **ENSEMBLE DE TRACTION CONSTITUÉ D'UNE LOCOMOTIVE ET D'UN TENDER ; PROCÉDÉ ASSOCIÉ**
TRIEBWAGENGRUPPE AUS EINER LOKOMOTIVE UND EINEM TENDER, ENTSPRECHENDES VERFAHREN
TRACTION ASSEMBLY MADE UP OF A LOCOMOTIVE AND A TENDER; ASSOCIATED METHOD

(30) Priorité: 27.07.2020 FR 2007880
(43) Date de publication de la demande: 02.02.2022
(73) Titulaire: ALSTOM Holdings, 93400 Saint-Ouen-sur-Seine (FR)
(72) Inventeur: HAVET, Jean-Luc, 90350 EVETTE SALBERT (FR); HEIDET, Arnaud, 90000 BELFORT (FR)
(74) Mandataire: Lavoix

(56) Documents cités:
- EP-A1- 1 288 060
- EP-A1- 2 340 958
- EP-A1- 2 810 812
- EP-A1- 2 810 813
- EP-A1- 3 616 975
- EP-A2- 1 977 948
- FR-A1- 3 061 094
- US-A1- 2002 177 929
- US-B2- 10 065 511

## Description

La présente invention a pour domaine celui des locomotives du type monocourant, bicourant, tricourant ou plus, fonctionnant par captage d'au moins une puissance électrique, alternative ou continue.

Par exemple, une locomotive bicourant est propre à capteur soit une première puissance électrique, notamment monophasée, au moyen d'un premier pantographe dédié, soit une deuxième puissance électrique, notamment continue, au moyen d'un second pantographe dédié.

Il y a un besoin de moderniser une flotte existante de locomotives en les équipant de moyens embarqués de stockage d'énergie propres à délivrer une puissance électrique d'alimentation des moteurs de traction de la locomotive. De tels moyens de stockage d'énergie sont par exemple des batteries, des supercapacités, des piles à combustibles, etc.

Cela permettrait, lorsqu'une telle locomotive modernisée circule sur une voie ferroviaire équipée d'une ligne caténaire, mais qu'un tronçon de cette dernière n'est pas alimenté (à la suite par exemple d'un dysfonctionnement), de permettre à la locomotive de fonctionner en autonomie pour franchir la section de voie correspondante.

Cela permettrait également, de faire circuler en autonomie ces locomotives modernisées le long d'itinéraires intégrant des sections de voie qui ne sont pas équipées de lignes caténaires. Incidemment, cela permettrait de mettre en service de nouvelles sections de voie sans avoir besoin de les équiper de lignes caténaires, i.e. de les électrifier, réduisant ainsi les coups d'infrastructure.

On connaît des locomotives équipées de moyens embarqués de stockage d'énergie. Cependant, ces moyens sont intégrés dès la conception de la locomotive, dans le circuit de puissance de celle-ci et/ou présentent une capacité/autonomie réduite.

Une telle approche ne convient pas à la modernisation d'une locomotive existante, car il serait à la fois complexe et trop coûteux de modifier le circuit de puissance d'une telle locomotive. De plus, l'intégration de tels moyens embarqués n'est pas toujours possible compte-tenu du volume disponible à bord d'une locomotive.

Le document EP 2 810 813 A1 divulgue un ensemble de traction comportant une locomotive, la locomotive comportant une ligne de toiture, raccordée électriquement à au moins un pantographe, un système de contrôle et un circuit de palpage, le système de contrôle étant propre à commander, en fonction des propriétés instantanées d'une tension sur la ligne de toiture détectées par le circuit de palpage, l'état ouvert ou fermé d'au moins un dispositif interrupteur placé entre la ligne de toiture et un circuit d'alimentation des moteurs de traction de la locomotive. Ce document divulgue par ailleurs d'embarquer à bord de la locomotive des moyens de stockage d'énergie. Ceux-ci sont connectés au bus DC commun du circuit d'alimentation des moteurs de traction de la locomotive.

Le document EP 1 977 948 A2 prévoit, sans autres précisions, de placer une batterie dans une voiture passagers, différente de la locomotive.

Le document EP 2 810 813 A1 divulgue un ensemble résultant de l'accouplement d'une locomotive et d'un tender, le tender intégrant un système de stockage d'énergie électrique connecté au bus DC commun du circuit d'alimentation des moteurs de traction de la locomotive. En mode freinage, le système récupère une partie de l'énergie générée par les moteurs et, en mode traction, fournit aux moteurs tout ou partie de l'énergie nécessaire à la traction.

Le but de l'invention est par conséquent de répondre à ce problème, en proposant notamment une solution simple à mettre en oeuvre qui permette une modernisation à moindre coups de locomotives existantes.

Pour cela l'invention a pour objet un ensemble de traction et un procédé de sélection d'une source de puissance électrique selon les revendications annexées.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :
- La figure 1 est une représentation schématique d'un ensemble de traction constitué d'une locomotive et d'un tender, plus particulièrement du circuit de puissance d'un tel ensemble de traction ; et,
- la figure 2 est une représentation sous forme de blocs d'un procédé de fonctionnement de l'ensemble de la figure 1.

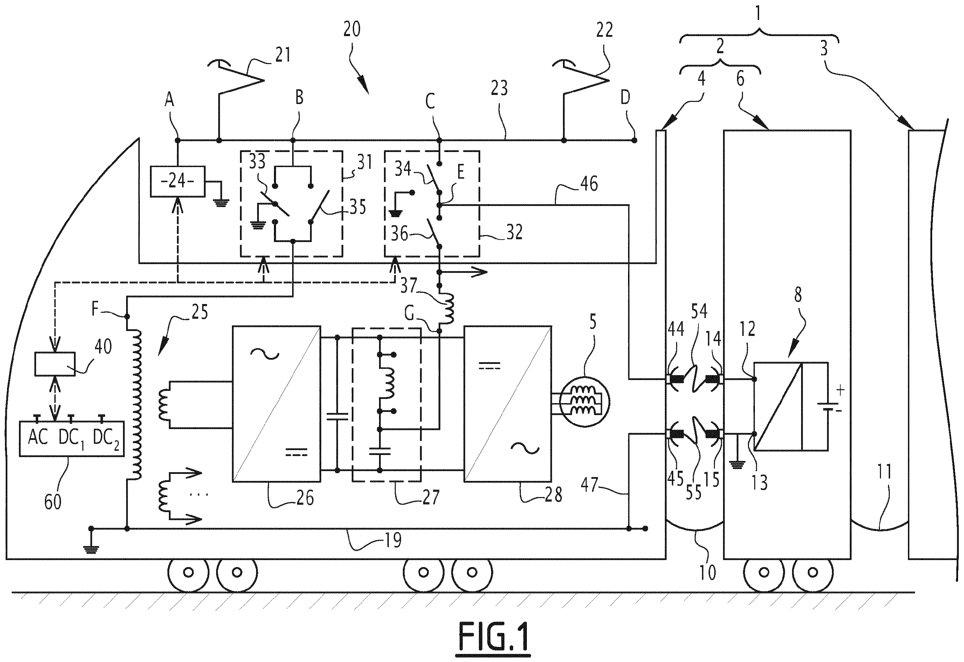

La figure 1 représente un train 1 constitué de l'attelage d'un ensemble de traction 2 avec un ou plusieurs wagons 3, tels que des voitures passagers.

Le train comprend un système de contrôle 40 propre à commander les différents équipements à bord du train. Ce système de contrôle 40 est notamment appelé système TCMS pour « train control and management system ».

L'ensemble de traction 2 est lui-même constitué de l'attelage d'une locomotive 4 par exemple du type bicourant et d'un tender 6 .

Historiquement, un tender est un wagon auxiliaire placé à la suite d'une locomotive et qui contient une réserve de combustible nécessaire à l'approvisionnement de celle-ci.

Selon l'invention, le tender 6 embarque des moyens de stockage d'énergie, référencés de manière générale par le chiffre 8, propres à délivrer un courant électrique continu. Ces moyens 8 sont par exemple constitués d'une source (telle que des batteries, des supercapacités, des piles à combustible, mixte (pile à combustible/batterie), ou de tout dispositif connu de l'homme du métier) et d'un convertisseur de courant, tel qu'un convertisseur continu - continu ou en variante un convertisseur continu-alternatif.

Les moyens de stockage d'énergie 8 comportent une première borne 12 et une deuxième borne 13. Cette dernière est avantageusement connectée électriquement à un point du tender 6 porté à un potentiel de référence.

La locomotive 4 comporte un circuit de puissance 20 pour l'alimentation des moteurs électriques de traction de la locomotive 4. Sur la figure 1, seul un moteur 5 est représenté, mais une locomotive en compte généralement deux ou quatre.

Le circuit 20 permet de capter un courant depuis une ligne aérienne, telle qu'une caténaire (non représentée sur la figure 1). Dans l'exemple de la figure 1, une locomotive bicourant est représentée et le circuit 20 permet par conséquent de capter soit un courant monophasé, soit un courant continu, depuis un point de contact avec une source d'alimentation, telle qu'une caténaire.

Le circuit de puissance 20 comporte une ligne de terre 19, connectée électriquement à un point porté à un potentiel de référence.

Le circuit de puissance 20 comporte, sur le toit de la locomotive 4, un premier pantographe dédié au captage d'un courant monophasé, ou pantographe AC 21, et avantageusement un second pantographe dédié au captage d'un courant continu, ou pantographe DC 22.

En variante le circuit de puissance comprend uniquement l'un des premier et deuxième pantographes ou plus de deux pantographes et le circuit de puissance est adapté en fonction.

Chaque pantographe 21, 22 est électriquement connecté à une ligne de toiture 23.

La ligne de toiture 23 s'étend, le long du toit de la locomotive 4, entre deux points d'extrémité A et D.

Un dispositif de palpage 24 est connecté électriquement à la ligne de toiture 23, par exemple au point d'extrémité avant A. Ce dispositif a pour fonction de détecter, à chaque instant, les propriétés du potentiel auquel est porté la ligne de toiture 23 et à transmettre ces informations au système de contrôle 40.

En fonction des résultats de cette détection, le système de contrôle 40 commande l'état des différents équipements, en particulier l'ouverture ou fermeture de dispositifs d'isolement 31 et 32 présentés ci-dessous en détail, pour acheminer convenablement la puissance électrique vers les moteurs.

Pour l'acheminement d'une puissance monophasée, la ligne de toiture 23 est reliée électriquement, au travers d'un dispositif d'isolement monophasé - AC 31, à un point F constituant une première borne du primaire d'un transformateur 25.

La seconde borne du primaire du transformateur 25 est connectée électriquement à la ligne de terre 19.

Le secondaire du transformateur 25 est connecté en entrée d'un convertisseur monophasé - continu 26.

Le courant continu délivré en sortie du convertisseur 26 est appliqué sur une première entrée d'un dispositif de filtrage 27.

Le courant continu filtré délivré en sortie du dispositif de filtrage 27 est appliqué en entrée d'un onduleur 28.

La fonction de l'onduleur 28 est alors de convertir un courant continu filtré, en un courant triphasé propre à alimenter le moteur 5.

La locomotive embarquant plusieurs moteurs, elle comporte autant de chaînes de conversion, chaque chaîne de conversion étant constituée d'un convertisseur monophasé - continu (connecté au secondaire du transformateur 25), d'un dispositif de filtrage et d'un onduleur tels que décrits ci-dessus.

Pour l'acheminement d'une puissance continue, la ligne de toiture 23 est reliée électriquement, au travers d'un dispositif d'isolement continu - DC 32, à un point G constituant une seconde entrée de chacun des dispositifs de filtrage 27 des chaînes d'alimentation de la locomotive.

Avantageusement, une inductance 37 est interposée entre le dispositif d'isolement DC 32 et le point G.

Le courant continu délivré en sortie d'un dispositif de filtrage 27 est alors appliqué en entrée de l'onduleur 28 afin d'être transformé en un courant triphasé d'alimentation du moteur 5 correspondant.

Le dispositif d'isolement AC 31 comporte un contacteur d'isolement monophasé - AC 33 et un disjoncteur monophasé - AC 35, montés en parallèle l'un de l'autre.

Plus précisément, une borne du contacteur d'isolement AC 33 et une borne du disjoncteur AC 35 sont connectées à un point B de la ligne de toiture 23 et l'autre borne du contacteur d'isolement AC 33 et l'autre borne du disjoncteur AC 35 sont connectées au point F.

Le système de contrôle 40 est propre à commander l'état ouvert ou fermé du disjoncteur AC 35 en fonction du type (alternatif/continu) et du niveau de tension détecté par le circuit de palpage 24 au niveau de la ligne 23. Par exemple, le système de contrôle 40 est propre à commander la fermeture du disjoncteur AC 35 si le circuit de palpage détecte une tension alternative de 25kV.

Le contacteur d'isolement AC 33 qui est propre à mettre au potentiel de la terre la ligne de toiture 23, est destiné à être commandé, de préférence manuellement, entre son état fermé et son état ouvert. Le contacteur d'isolement AC 33 est notamment destiné à être commandé manuellement en état fermé de mise à la terre via une clé de manipulation, lors d'une opération de mise à la terre de la ligne 23.

Le dispositif d'isolement DC 32 comporte, en série, un contacteur d'isolement continu - DC 34 et un disjoncteur continu - DC 36.

Plus précisément, une borne du contacteur d'isolement DC 34 est connectée à un point C de la ligne de toiture 23 et l'autre borne du contacteur d'isolement DC 34 est connectée à un point intermédiaire E. Une borne du disjoncteur DC 36 est connectée au point intermédiaire E et l'autre borne du disjoncteur DC 36 est connectée à l'inductance 37.

Le système de contrôle 40 est propre à commander l'état ouvert ou fermé du disjoncteur DC 36 en fonction du type (alternatif/continu) et du niveau de tension détecté par le circuit de palpage 24 au niveau de la ligne 23. Par exemple, le système de contrôle 40 est propre à commander la fermeture du disjoncteur DC 36 si le circuit de palpage détecte une tension continue de 1,5 kV.

En outre, le système de contrôle 40 est propre à commander l'état ouvert ou fermé du contacteur d'isolement DC 34 lorsque une tension continue est fournie sur la ligne 23. Le conducteur saisit par exemple au niveau d'une interface avec le système de contrôle 40 qu'il est sur une portion de voie à alimentation continue et le système de contrôle 40 commande la fermeture du contacteur d'isolement DC 34.

D'autre équipements peuvent être prévus, tels que par exemple des dispositifs contre la foudre, des moyens d'isolement des pantographes, des systèmes de mesure des puissances captées, etc.

Selon l'invention, le tender 6 est couplé mécaniquement à la locomotive 4 par un lien d'attelage 10.

Le tender 6 est par ailleurs couplé électriquement à la locomotive 4 pour que les moyens de stockage d'énergie 8 puissent fournir une puissance électrique aux moteurs de traction 5 de la locomotive 4.

Pour cela, des connecteurs dédiés 14 et 15, sont prévus sur une face avant de la caisse du tender 6. Ils sont respectivement connectés électriquement à la première borne 12 et à la deuxième borne 13 des moyens 8. Avantageusement, le tender comprend un disjoncteur de sécurité entre la borne 12 et le connecteur 14.

Des connecteurs dédiés 44 et 45, sont également prévus sur la caisse de la locomotive 4, par exemple sur chacune des faces d'extrémité de la caisse de la locomotive, afin de pouvoir connecter électriquement le tender à la locomotive quelle que soit la direction de la locomotive (retournement).

La liaison électrique entre le tender 6 et la locomotive 4 est réalisée par un premier câble électrique 54, couplé d'une part au connecteur 14 du tender et d'autre part au connecteur 44 de la locomotive, et par un second câble électrique 55 couplé d'une part au connecteur 15 du tender et d'autre part au connecteur 45 de la locomotive.

Côté locomotive 4, un ou plusieurs câbles haute tension 46 relie le connecteur 44 à la ligne de toiture 23. Le câble haute tension 46 est avantageusement connecté au point intermédiaire E de manière à pouvoir être isolé ou connecté à la ligne de toiture 23 en fonction de l'état ouvert ou fermé du contacteur d'isolement DC 34.

En variante, si le tender est propre à fournir un signal électrique monophasé, le câble 46 est avantageusement connecté en entrée du disjoncteur monophasé 35 et un contacteur d'isolement est par exemple prévu entre la ligne de toiture 23 et le disjoncteur monophasé 35.

Avantageusement, le câble haute tension 46 circule à l'extérieur de la caisse de la locomotive 4, sur le toit de la locomotive. Il peut, en fonction de la configuration de l'engin, être installé à l'intérieur de la locomotive.

Un ou plusieurs câbles de terre 47 relie le connecteur 45 à la ligne de terre 19 de la locomotive 4. De ce fait, le tender et la locomotive partagent un même potentiel de référence.

Par ailleurs, pour sélectionner le mode d'alimentation de la locomotive, un sélecteur 60 est prévu à bord de la locomotive, avantageusement en cabine. Il permet au conducteur de sélectionner un mode parmi un ou plusieurs modes par captage et un mode en autonomie. Par exemple, trois modes de fonctionnement possibles sont envisagés pour une locomotive bicourant :
- un premier mode par captage correspondant à l'utilisation d'une puissance monophasée captée par le premier pantographe AC 21 (typiquement par exemple de 25 kV AC);
- un second mode par captage correspondant à l'utilisation d'une puissance continue captée par le second pantographe DC 22 (typiquement par exemple de 1,5 kV DC) ; et,
- un troisième mode en autonomie correspondant à l'utilisation d'une puissance continue délivrée par les moyens de stockage d'énergie 8 embarqués (typiquement par exemple de 1,5 kV DC).

L'information correspondant à l'état du sélecteur 60, et par conséquent au mode de fonctionnement sélectionné par le conducteur, est transmise au système de contrôle 40 qui est propre à commander le déplacement des pantographes et/ou à configurer le circuit de puissance 20 en fonction de cette information.

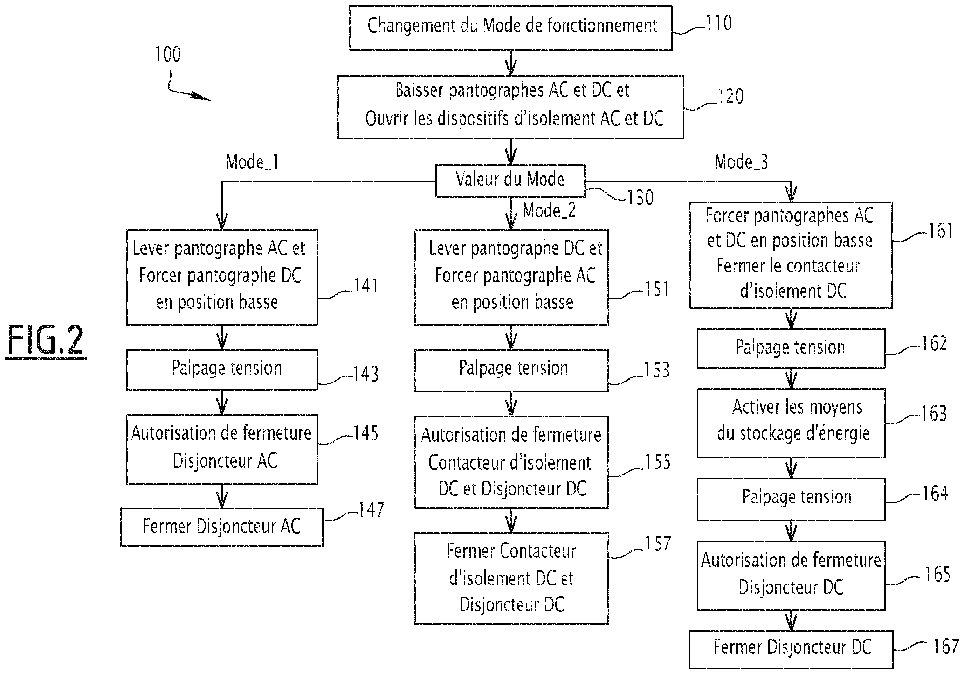

Selon l'invention, le système de contrôle 40 est programmé pour mettre en oeuvre le procédé de sélection d'une source de puissance électrique représenté sur la figure 2 lors d'un changement du mode de fonctionnement.

Le procédé 100 débute lorsqu'à l'étape 110, le pilote modifie le mode de fonctionnement courant, c'est-à-dire la source de puissance à utiliser pour l'alimentation des moteurs de traction, en sélectionnant un nouveau mode de fonctionnement au moyen du sélecteur 60. Le système de contrôle 40 et le tender reçoivent donc une information indicative du nouveau mode de fonctionnement.

Dans l'étape 120, les pantographes AC et DC sont baissés et les disjoncteurs 35, 36 et le contacteur d'isolement 34 sont basculés dans l'état ouvert.

Dans l'étape 130, la valeur du nouveau mode de fonctionnement est testée.

Si le nouveau mode correspond au premier mode Mode_1, alors, dans l'étape 141, le pantographe AC est levé de manière à être mis en contact d'une caténaire délivrant un courant monophasé. Le pantographe DC est alors bloqué dans la position baissée et le contacteur 34 est dans une position d'isolement dans laquelle il isole le point intermédiaire E du potentiel de la ligne de toiture 23. Le disjoncteur 36 est avantageusement maintenu dans l'état ouvert.

Puis, dans l'étape suivante 143, le circuit de palpage 24 détecte que la ligne de toiture 23 est portée à un potentiel monophasé, dans une plage acceptable de tension.

En réaction, à l'étape 145, le système de contrôle 40 autorise la fermeture du disjoncteur AC 35, tout en maintenant ouvert le disjoncteur DC 36. Le contacteur 34 est également maintenu dans sa position d'isolement.

Enfin, à l'étape 147, le disjoncteur AC 35 est fermé. Dans ces conditions, le courant monophasé capté par le pantographe AC 21 est appliqué, via le transformateur 25, en entrée de chacune des chaînes d'alimentation.

Si le nouveau mode correspond en revanche au second mode Mode_2, alors, dans l'étape 151, le pantographe DC 22 est placé en position levée de manière à être mis en contact d'une caténaire délivrant un courant continu et le contacteur 34 est déplacé en état fermé reliant électriquement le point E au potentiel de la ligne de toiture 23. Le pantographe AC est alors bloqué dans la position baissée et le disjoncteur 35 est maintenu dans l'état ouvert.

Dans l'étape 153, le circuit de palpage 24 détecte la présence d'un courant continu sur la ligne de toiture 23.

En réaction, dans l'étape 155, le système de contrôle 40 autorise la fermeture du disjoncteur DC 36, tout en maintenant en ouverture le disjoncteur AC 35.

Enfin, à l'étape 157, le disjoncteur DC 36 est fermé. Dans ces conditions, le courant continu capté par le pantographe DC 22 est appliqué, via le dispositif de filtrage 27, directement en entrée de l'onduleur 28 de chacune des chaînes d'alimentation.

Enfin, si à l'étape 130 il est déterminé que le nouveau mode correspond au troisième mode MODE_3, alors, dans l'étape 161, les pantographes AC 21 et DC 22 sont forcés dans leur position baissée et le contacteur 34 est déplacé vers l'état fermé reliant électriquement le point E au potentiel de la ligne de toiture 23.

A l'étape 162, le circuit de palpage 24 ne détecte aucune tension sur la ligne de toiture 23, puisque les pantographes AC 21 et DC 22 sont forcés dans leur position baissée et que les disjoncteurs 35, 36 sont ouverts.

En réaction, à l'étape 163, le système de contrôle 40 active les moyens de stockage d'énergie 8 de manière à alimenter les lignes 54 et 46. Ceci a pour conséquence d'appliquer la tension de la borne 12 des moyens de stockage d'énergie 8 à la ligne de toiture 23 via le commutateur 34.

Puis, à l'étape 164, le circuit de palpage 24 détecte une tension continue sur la ligne de toiture 23.

En réaction, dans l'étape 165, le système de contrôle 40 autorise la fermeture du disjoncteur DC 36, tout en maintenant en ouverture le disjoncteur AC 35.

Enfin, à l'étape 167, le disjoncteur DC 36 est fermé. Dans ces conditions, le courant continu délivré par les moyens de stockage d'énergie 8 est appliqué, via le dispositif de filtrage 27, directement en entrée de l'onduleur 28 de chacune des chaînes d'alimentation.

L'homme du métier constatera que l'ensemble de traction selon l'invention permet de moderniser simplement une locomotive du type par captage du courant. La connexion par un câble haute tension des moyens de stockage d'énergie embarqués par le tender directement à la ligne de toiture est facile à réaliser en pratique. Les moyens de stockage d'énergie embarqués à bord du tender sont choisis pour délivrer un courant adapté au circuit de puissance de la locomotive.

Dans le cas d'une locomotive bicourant monophasé/continu et de moyens de stockage d'énergie délivrant un courant continu, en connectant le câble haute tension à la ligne de toiture par l'intermédiaire du contacteur d'isolement 34, on réutilise ce composant pour protéger les moyens de stockage d'énergie lorsque la ligne de toiture est portée à une tension monophasé. Par ailleurs, alors que la ligne de toiture est portée à une tension continue dans le second mode de fonctionnement par captage, le courant capté peut avantageusement servir à recharger les moyens de stockage d'énergie du tender, via le contacteur d'isolement 34.

En variante, la locomotive est non pas bicourant mais tricourant ou plus, pouvant capter par exemple plusieurs types de courants monophasés et/ou plusieurs types de courants continus au moyens de ses pantographes.

Selon une autre variante, la locomotive est mono-courant même si le mode de réalisation préférentiel décrit ci -dessus est une locomotive bicourant.

## Revendications

1. Ensemble de traction (2) comportant une locomotive (4), la locomotive comportant des moteurs de traction (5) de la locomotive, un circuit d'alimentation des moteurs de traction (5) de la locomotive, une ligne de toiture (23), raccordée électriquement à au moins un pantographe, au moins un interrupteur (31,32) placé entre la ligne de toiture (23) et ledit circuit d'alimentation des moteurs de traction (5) de la locomotive, un système de contrôle (40) et un circuit de palpage (24), le système de contrôle (40) étant propre à commander, en fonction des propriétés instantanées d'une tension sur la ligne de toiture (23) détectées par le circuit de palpage, l'état ouvert ou fermé dudit au moins un dispositif interrupteur (31,32), ledit ensemble de traction (2) étant **caractérisé en ce qu'**il comporte, en outre, un tender (6), attelé mécaniquement à la locomotive (4), le tender (6) embarquant des moyens de stockage d'énergie (8) propres à délivrer un courant d'alimentation des moteurs de traction (5), les moyens de stockage d'énergie présentant une première borne (12) et une deuxième borne (13), et **en ce que** le tender (6) est connecté électriquement à la locomotive (4) de manière à ce que la première borne soit reliée directement à la ligne de toiture (23) de la locomotive (4) au moyen d'un câble haute tension (46), et que la deuxième borne (13) soit reliée à un point de la locomotive porté à un potentiel de référence.

2. Ensemble de traction (2) selon la revendication 1, dans lequel ledit au moins un dispositif interrupteur comprend un dispositif interrupteur continu (32) comportant, en série, un premier dispositif de commutation continu (34) entre un point de la ligne de toiture (23) et un point intermédiaire (E) et un deuxième dispositif de commutation continu (36) entre le point intermédiaire et un point constituant une entrée du circuit d'alimentation des moteurs de traction, la première borne (12) des moyens de stockage d'énergie étant connectée au point intermédiaire de manière à être relié à la ligne de toiture au travers du premier dispositif de commutation continu (34).

3. Ensemble de traction (2) selon la revendication 1, dans lequel la ligne de toiture (23) est raccordée électriquement à un pantographe monophasé (21) propre à capter un courant monophasé et à un pantographe continu (22) propre à capter un courant continu, le système de contrôle (40) étant propre à commander, en fonction des propriétés instantanées de la tension sur la ligne de toiture (23) détectées par le circuit de palpage (24), l'état ouvert ou fermé d'un dispositif interrupteur monophasé (31) placé entre la ligne de toiture (23) et un circuit d'alimentation par courant monophasé des moteurs de traction (5) de la locomotive (4) et à commander l'état ouvert ou fermé d'un dispositif interrupteur continu (32) situé entre la ligne de toiture (23) et un circuit d'alimentation par courant continu des moteurs de traction (5) de la locomotive.

4. Ensemble de traction (2) selon la revendication 3, dans lequel le circuit d'alimentation monophasé comporte successivement un transformateur (25), un convertisseur monophasé - continu (26), un premier dispositif de filtrage, et un onduleur (28) connecté à au moins un moteur de traction (5), et dans lequel le circuit d'alimentation continu comporte successivement un second dispositif de filtrage et l'onduleur (28), les premier et second dispositifs de filtrage ayant des entrées différentes, partageant des composants communs et une sortie commune vers l'onduleur (28).

5. Ensemble de traction (2) selon l'une quelconque des revendications 1 à 4, dans lequel la locomotive (4) comporte, de préférence en cabine, un sélecteur (60) permettant de sélectionner un mode de fonctionnement parmi : un mode par captage correspondant à l'utilisation d'une puissance monophasée ou continue captée par le pantographe et un mode en autonomie correspondant à l'utilisation d'une puissance continue délivrée par les moyens de stockage d'énergie (8) du tender (6), le sélecteur étant propre à transmettre au système de contrôle (40) une information indicative du mode de fonctionnement sélectionné à prendre en compte pour commander l'état ouvert ou fermé du ou de chaque dispositif interrupteur.

6. Ensemble de traction (2) selon l'une quelconque des revendications 1 à 5, dans lequel :
- le tender (6) est équipé d'une paire de premiers connecteurs, respectivement connectés électriquement à la première borne (12) et à la deuxième borne (13) des moyens de stockage d'énergie (8) ;
- la locomotive (4) est équipée d'une paire de deuxièmes connecteurs, ledit câble haute tension (46) reliant l'un des deuxièmes connecteurs (44) à la ligne de toiture (23) et un câble de terre (47) reliant l'autre des deuxièmes connecteurs (45) au potentiel de référence de la locomotive (4),
et dans lequel une liaison électrique entre le tender (6) et la locomotive (4) est réalisée par un premier et un deuxième câbles électriques (54, 55), connectés entre les premiers et deuxièmes connecteurs.

7. Ensemble de traction (2) selon la revendications 6, dans lequel la paire de deuxièmes connecteurs (44, 45) est prévue sur une ou chaque face d'extrémité de la locomotive (4) et le câble haute-tension (46) circule le long de la caisse de la locomotive (4) pour gagner la toiture de la locomotive (4).

8. Ensemble de traction (2) selon l'une quelconque des revendications 1 à 7, dans lequel les moyens de stockage d'énergie (8) sont propres à délivrer un courant continu compris entre 1,5 kV DC et 3 kV DC.

9. Ensemble de traction (2) selon l'une quelconque des revendications 1 à 8, dans lequel les moyens de stockage d'énergie (8) sont propres à être rechargés par une puissance électrique captée par ledit au moins un pantographe.

10. Ensemble de traction (2) selon la revendication 2, comprenant un système de contrôle (40) de l'ensemble de traction (2) configuré à, lors de la sélection d'un mode de fonctionnement correspondant à l'utilisation d'une puissance continue délivrée par les moyens de stockage d'énergie (8) du tender (6) :
- bloquer (161) en position baissée le pantographe et fermer le premier dispositif de commutation continu (34) ;
- détecter (162) une tension nulle sur la ligne de toiture (23) ;
- activer (163) les moyens de stockage d'énergie (8) pour qu'ils délivrent une tension continue à la ligne de toiture ;
- détecter (164) une tension comprise dans une plage de valeurs prédéterminées sur la ligne de toiture (23) ; et,
- fermer (167) le deuxième dispositif de commutation continu (36).

## Patentansprüche

1. Triebwagengruppe (2), aufweisend eine Lokomotive (4), wobei die Lokomotive Triebwagenmotoren (5) der Lokomotive, einen Versorgungskreis der Triebwagenmotoren (5) der Lokomotive, eine Dachleitung (23), die elektrisch mit mindestens einem Stromabnehmer verbunden ist, mindestens einen Schalter (31, 32), der zwischen der Dachleitung (23) und dem Versorgungskreis der Triebwagenmotoren (5) der Lokomotive platziert ist, ein Steuersystem (40) und eine Abtastschaltung (24) aufweist, wobei das Steuersystem (40) geeignet ist, in Abhängigkeit von den momentanen Eigenschaften einer Spannung auf der Dachleitung (23), die von der Abtastschaltung erfasst werden, den offenen oder geschlossenen Zustand der mindestens einer Schaltervorrichtung (31, 32) zu steuern, wobei die Triebwagengruppe (2) **dadurch gekennzeichnet ist, dass** sie ferner einen Tender (6) umfasst, der mechanisch an der Lokomotive (4) angekuppelt ist, wobei der Tender (6) Energiespeichermittel (8) mitführt, die geeignet sind, einen Strom zur Versorgung der Triebwagenmotoren (5) bereitzustellen, wobei die Energiespeichermittel einen ersten Anschluss (12) und einen zweiten Anschluss (13) aufweisen, und dass der Tender (6) elektrisch mit der Lokomotive (4) verbunden ist, so dass der erste Anschluss direkt mit der Dachleitung (23) der Lokomotive (4) mittels eines Hochspannungskabels (46) verbunden ist und dass der zweite Anschluss (13) mit einem Punkt der Lokomotive verbunden ist, der auf ein Bezugspotential gebracht wird.

2. Triebwagengruppe (2) nach Anspruch 1, wobei die mindestens eine Schaltervorrichtung eine Gleichstromschaltvorrichtung (32) umfasst, die in Reihe eine erste Gleichstromumschaltvorrichtung (34) zwischen einem Punkt der Dachleitung (23) und einem Verbindungspunkt (E) und eine zweite Gleichstromumschaltvorrichtung (36) zwischen dem Zwischenpunkt und einem Punkt, der einen Eingang des Stromkreises zur Versorgung der Triebwagenmotoren bildet, umfasst, wobei der erste Anschluss (12) der Energiespeichermittel mit dem Zwischenpunkt verbunden ist, so dass er über die erste Gleichstromumschaltvorrichtung (34) mit der Dachleitung verbunden ist.

3. Triebwagengruppe (2) nach Anspruch 1, wobei die Dachleitung (23) elektrisch mit einem Einphasen-Stromabnehmer (21), der geeignet ist, einen Einphasenstrom abzunehmen, und mit einem Gleichstrom-Stromabnehmer (22), der geeignet ist, einen Gleichstrom abzunehmen, verbunden ist, wobei das Steuersystem (40) geeignet ist, in Abhängigkeit von den momentanen Eigenschaften der Spannung auf der Dachleitung (23), die von der Abtastschaltung (24) erfasst werden, den offenen oder geschlossenen Zustand einer Einphasen-Schaltervorrichtung (31) zu steuern, die zwischen der Dachleitung (23) und einem Einphasen-Stromversorgungskreis der Triebwagenmotoren (5) der Lokomotive (4) platziert ist, und den offenen oder geschlossenen Zustand einer Gleichstrom-Schaltervorrichtung (32) zu steuern, die sich zwischen der Dachleitung (23) und einem Gleichstromversorgungskreis der Triebwagenmotoren (5) der Lokomotive befindet.

4. Triebwagengruppe (2) nach Anspruch 3, wobei der Einphasen-Versorgungsstromkreis nacheinander einen Transformator (25), einen Einphasen-Gleichstrom-Wandler (26), eine erste Filtervorrichtung und einen Wechselrichter (28) umfasst, der mit mindestens einem Triebwagenmotor (5) verbunden ist, und wobei der Gleichstromversorgungskreis nacheinander eine zweite Filtervorrichtung und den Wechselrichter (28) umfasst, wobei die erste und zweite Filtervorrichtung unterschiedliche Eingänge, sich gemeinsame Komponenten teilen, und einen gemeinsamen Ausgang zum Wechselrichter (28) haben.

5. Triebwagengruppe (2) nach einem der Ansprüche 1 bis 4, wobei die Lokomotive (4), vorzugsweise in der Kabine, einen Wahlschalter (60) aufweist, mit dem eine Betriebsart ausgewählt werden kann aus : einem Stromabnahmemodus, der der Nutzung einer vom Stromabnehmer abgenommenen Einphasen- oder Gleichstromleistung entspricht, und einem Autonomiemodus, der der Nutzung einer von den Energiespeichermitteln (8) des Tenders (6) gelieferten Gleichstromleistung entspricht, wobei der Wahlschalter geeignet ist, dem Steuersystem (40) eine Information zu übermitteln, die den ausgewählten Betriebsmodus anzeigt, der zu berücksichtigen ist, um den offenen oder geschlossenen Zustand der oder jeder Schaltervorrichtung zu steuern.

6. Triebwagengruppe (2) nach einem der Ansprüche 1 bis 5, wobei:
- der Tender (6) mit einem Paar erster Verbinder ausgestattet ist, die jeweils elektrisch mit dem ersten Anschluss (12) und dem zweiten Anschluss (13) der Energiespeichermittel (8) verbunden sind;
- die Lokomotive (4) mit einem Paar zweiter Verbinder ausgestattet ist, wobei das Hochspannungskabel (46) einen der zweiten Verbinder (44) mit der Dachleitung (23) verbindet und ein Erdungskabel (47) den anderen der zweiten Verbinder (45) mit dem Bezugspotential der Lokomotive (4) verbindet,
und wobei eine elektrische Verbindung zwischen dem Tender (6) und der Lokomotive (4) durch ein erstes und ein zweites elektrisches Kabel (54, 55) hergestellt wird, die zwischen dem ersten und dem zweiten Verbinder verbunden sind.

7. Triebwagengruppe (2) nach Anspruch 6, wobei das Paar zweiter Verbinder (44, 45) an einer oder jeder Endfläche der Lokomotive (4) vorgesehen ist und das Hochspannungskabel (46) entlang des Kastens der Lokomotive (4) verläuft, um das Dach der Lokomotive (4) zu erreichen.

8. Triebwagengruppe (2) nach einem der Ansprüche 1 bis 7, wobei die Energiespeichermittel (8) geeignet sind, einen Gleichstrom zwischen 1,5 kV DC und 3 kV DC zu liefern.

9. Triebwagengruppe (2) nach einem der Ansprüche 1 bis 8, wobei die Energiespeichermittel (8) geeignet sind, durch eine elektrische Leistung aufgeladen zu werden, die von mindestens einen Stromabnehmer aufgenommen wird.

10. Triebwagengruppe (2) nach Anspruch 2, umfassend ein Steuersystem (40) der Triebwagengruppe (2), das so konfiguriert ist, dass bei der Auswahl einer Betriebsart, die der Nutzung einer von den Energiespeichermitteln (8) des Tenders (6) gelieferten Gleichstromleistung entspricht:
- der Stromabnehmer in der abgesenkten Position blockiert (161) und die ersten Gleichstromumschaltvorrichtung (34) geschlossen wird;
- eine Nullspannung auf der Dachleitung (23) erfasst wird (162);
- die Energiespeichermittel (8) aktiviert werden (163), um eine Gleichspannung an die Dachleitung zu liefern;
- eine Spannung innerhalb eines vorbestimmten Wertebereichs auf der Dachleitung (23) erfassen (164) wird; und,
- die zweite Gleichstromumschaltvorrichtung (36) geschlossen (167) wird.

## Claims

1. A traction assembly (2) comprising a locomotive (4), the locomotive comprising traction motors (5) of the locomotive, a power supply circuit of the traction motors (5) of the locomotive, a roof line (23), electrically connected to at least one pantograph, at least a switching device (31, 32) located between the roof line (23) and the power supply circuit of the traction motors (5) of the locomotive, a control system (40) and a sensing circuit (24), the control system (40) being adapted to command, as a function of the instantaneous properties of a voltage on the roof line (23) detected by the sensing circuit, the open or closed state of the at least one switching device (31, 32), said traction assembly (2) being **characterised in that** it further comprises a tender (6) mechanically coupled to the locomotive (4), the tender (6) carrying energy storage means (8) suitable for delivering a current for supplying the traction motors (5), the energy storage means having a first terminal (12) and a second terminal (13), and **in that** the tender (6) is electrically connected to the locomotive (4) in such a way that the first terminal is connected directly to the roof line (23) of the locomotive (4) by means of a high voltage cable (46) and that the second terminal (13) is connected to a point on the locomotive which is set to a reference potential.

2. A traction assembly (2) according to claim 1, wherein said at least one switching device comprises a DC switching device (32) having, in series, a first DC switching device (34) between a point of the roof line (23) and an intermediate point (E) and a second DC switching device (36) between the intermediate point and a point constituting an input of the power supply circuit of the traction motors, the first terminal (12) of the energy storage means being connected to the intermediate point so as to be connected to the roof line through the first DC switching device (34).

3. A traction assembly (2) according to claim 1, wherein the roof line (23) is electrically connected to a single-phase pantograph (21) suitable for collecting a single-phase current and to a direct current pantograph (22) suitable for collecting a direct current, the control system (40) being adapted to command, as a function of the instantaneous properties of the voltage on the roof line (23) detected by the sensing circuit (24), the open or closed state of a single-phase switching device (31) located between the roof line (23) and a single-phase power supply circuit of the traction motors (5) of the locomotive (4) and to command the open or closed state of a DC switching device (32) located between the roof line (23) and a DC power supply circuit of the traction motors (5) of the locomotive.

4. A traction assembly (2) according to claim 3, wherein the single-phase power supply circuit successively comprises a transformer (25), a single-phase/DC converter (26), a first filter device, and an inverter (28) connected to at least one traction motor (5) and wherein the DC power supply circuit successively comprises a second filter device and the inverter (28), the first and second filter devices having different inputs, sharing common components and a common output to the inverter (28).

5. A traction assembly (2) according to any one of claims 1 to 4, wherein the locomotive (4) comprises, preferably in the cab, a selector (60) making it possible to select an operating mode from: a collection mode corresponding to the use of a single-phase or DC power collected by the pantograph and a stand-alone mode corresponding to the use of a DC power delivered by the energy storage means (8) of the tender (6), the selector being suitable for transmitting to the control system (40) information indicative of the selected operating mode to be taken into account for ordering the open or closed state of the or each switching device.

6. A traction assembly (2) according to any one of claims 1 to 5, wherein:
- the tender (6) is equipped with a pair of first connectors, respectively electrically connected to the first terminal (12) and the second terminal (13) of the energy storage means (8);
- the locomotive (4) is equipped with a pair of second connectors, said high-voltage cable (46) connecting one of the second connectors (44) to the roof line (23) and an earth cable (47) connecting the other of the second connectors (45) to the reference potential of the locomotive (4),
and wherein an electrical connection between the tender (6) and the locomotive (4) is provided by first and second electrical cables (54, 55) connected between the first and second connectors.

7. A traction assembly (2) according to claim 6, wherein the pair of second connectors (44, 45) is provided on one or each end face of the locomotive (4) and the high voltage cable (46) runs along the body of the locomotive (4) to the roof of the locomotive (4).

8. A traction assembly (2) according to any one of claims 1 to 7, wherein the energy storage means (8) are adapted to deliver a direct current of between 1.5 kV DC and 3 kV DC.

9. A traction assembly (2) according to any one of claims 1 to 8, wherein the energy storage means (8) are adapted to be recharged by electrical power captured by said at least one pantograph.

10. A traction assembly (2) according to claim 2, comprising a control system (40) of the traction assembly (2) configured to, when selecting an operating mode corresponding to the use of a DC power delivered by the energy storage means (8) of the tender (6):
- locking (161) the pantograph in the lowered position and closing the first DC switching device (34);
- detecting (162) a zero voltage on the roof line (23);
- activating (163) the energy storage means (8) to deliver a DC voltage to the roof line;
- detecting (164) a voltage within a predetermined range of values on the roofline (23); and,
- closing (167) the second DC switching device (36).
